# EUROPEAN PATENT SPECIFICATION

(11) **EP 3 180 567 B1**
(45) Date of publication and mention of the grant of the patent: **25.11.2020**
(21) Application number: 15831468.2
(22) Date of filing: 14.08.2015
(51) Int. Cl.: F23N 1/00, F23D 14/20, F23D 14/56, F23D 14/58, F23D 14/84

(54) **DUAL OUTLET BURNER AND METHOD**
BRENNER MIT DOPPELTEM AUSLASS UND VERFAHREN
BRÛLEUR À DOUBLE SORTIE ET PROCÉDÉ

(30) Priority: 15.08.2014 US 201462037708 P
(43) Date of publication of application: 21.06.2017
(73) Proprietor: Eclipse Inc., Rockford, Illinois 61103 (US)
(72) Inventor: ANDERSON, Scott, Orlando, Florida 32833 (US)
(74) Representative: Houghton, Mark Phillip
(86) International application number: PCT/US2015/045311
(87) International publication number: WO 2016/025855

(56) References cited:
- EP-A1- 0 513 414
- EP-A1- 2 118 565
- GB-A- 298 080
- US-A- 904 452
- US-A- 2 701 164
- US-A- 3 029 029
- US-A- 4 383 820
- US-A1- 2003 157 451
- US-A1- 2003 197 071
- US-A1- 2008 131 827
- US-A1- 2010 263 382
- US-B1- 6 176 702

## Description

### CROSS-REFERENCE TO RELATED APPLICATIONS

**UND**

Industrial furnaces, such as regenerative glass melting furnaces, operate at high temperatures, typically in the range of about 1315,55-1648,88 °C (2400-3000°F) to promote furnace and process thermal efficiency. As a result, furnace and flame temperatures tend to be high, resulting in the generation of significant amounts of NOx emissions.

Efforts to control NOx emissions have resulted in the development of various NOx control technologies. Such technologies inhibit NOx formation by modifying flame stoichiometry and the overall combustion process. Exemplary NOx control technologies include oxygen-enriched air staging, in which oxygen-enriched air is introduced in stages into the combustion process, exhaust gas recirculation, in which exhaust gas is introduced into the primary combustion zone to reduce the flame temperature, fuel staging, in which the fuel is introduced in stages into the combustion process, and other methods such as oscillating and pulsed combustion. Although some of these controls have been partially effective at controlling NOx emissions, they may not sufficiently address NOx formation and reduction at the burner. EP 0513414 describes a device for controlling gas flow in a burner, having concentric inner and outer nozzles with separately variable cross sections. US 20080131827 describes a gas injector with diffuser. The diameter ratio of the mouth and the feed pipe is less than three. US 904452 describes a blow pipe for burning gas mixtures, having a nozzle whereby the flow of gas and air can be independently regulated. US 6176702 describes a gas burner with constricted throat region, having a tapered conduit fuel outlet with an outer diameter larger than the inside diameter of the constricted throat.

### BRIEF SUMMARY OF THE INVENTION

The present invention in its various aspects is as set out in the appended claims.

The present invention relates to a burner having a single fuel inlet and inner and outer nozzle gas jet outlets, the gas velocity of the outlets being separately controlled using two valves. In one embodiment, a first valve, which is referred to herein as a flow adjustment valve (FAV), controls gas flow and gas velocity provided to an inner nozzle of the burner. Operation of the FAV permits the selective increase or decrease of a gas jet velocity leaving the inner nozzle. A second valve, which is referred to herein as the area adjustment valve (AAV), controls gas flow and gas velocity provided through an outer nozzle of the burner. Operation of the AAV permits the selective increase or decrease of a gas jet velocity leaving the outer nozzle. In one embodiment, a swirling device is provided to impart a swirl to the outer gas jet to swirl, which widens a flame shape. The terms "gas" and/or "gaseous fuel" as used herein refers to a flow of fuel in gas form such as natural gas, liquid petroleum gas (LPG), and other gaseous fuels commonly used in industrial process burners to produce a flame when burned in the presence of air and/or another oxidant. In the illustrated embodiments, the FAV and AAV allow the separate control of the inner and outer nozzle velocity to produce a selectively adjustable flame shape that reduces NOx emissions and increases efficiency over traditional gas burners.

In one aspect, the present disclosure relates to a single fuel inlet gas burner for use in industrial regenerative glass melting furnaces and other applications. The gas burner is arranged and configured to produce a separately - controlled twin jet nozzle within the burner, which changes gas jet velocity of inner and outer concentric nozzles to adjust the flame shape. In this way, the flame shape can be adjusted to lower NOx, increase efficiency and/or focus heat transfer to particular areas of the process. According to the invention, an intermediate tube that is moveable within the burner forms the FAV to control the velocity of the inner fuel jet. As the FAV moves forward into the burner, the velocity of the inner nozzle jet is increased by the closing of a forward valve element and the corresponding opening of a rear valve element in the burner body. Similarly, as the FAV moves back within the burner body, the velocity of the inner nozzle is decreased by the closing of the rear valve element and the corresponding opening of the forward valve element in the burner body.

In one described embodiment, the outer gas velocity jet is controlled by the AAV, which controls the velocity of the remaining fuel in the burner, i.e., a portion of the gas provided to the burner that does not exit the burner through the inner nozzle. As the AAV moves forward in the burner body, the outer velocity of the outer jet is increased by reduction of the area between the inner and outer nozzle. Similarly, as the AAV moves back in the burner body, the outer velocity of the outer jet is decreased by increasing the area between the inner and outer nozzle. In alternative embodiments, more than one style of inner nozzle can be used to fine tune the area adjustment of the AAV.

### BRIEF DESCRIPTION OF THE DRAWINGS

FIG. 1 is an outline view of a gas burner, from a top perspective, in accordance with the invention.
FIGs. 2-5 are sectional views of the gas burner of FIG. 1 in various operating positions.
FIG. 6 is a sectional view of an alternative embodiment of a gas burner in accordance with the invention.

Before the embodiments of the burner and method are explained in detail, it is to be understood that the invention is not limited in its application to the details of construction and/or the arrangements of the components set forth in the following description or illustrated in the drawings. Rather, the invention is capable of other embodiments and of being practiced or carried out in various ways. Also, it is to be understood that the phraseology and terminology used herein are for purposes of description only and should not be regarded as limiting. The use of "including," "comprising," and variations thereof is meant to encompass the items listed thereafter and equivalents, as well as additional items and equivalents thereof.

### DETAILED DESCRIPTION

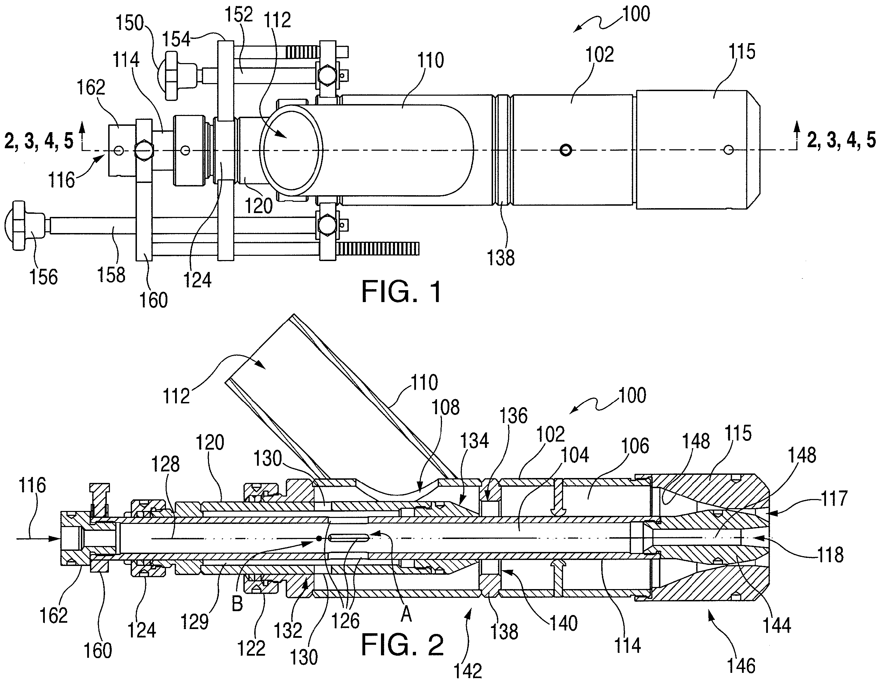

Reference will now be made to the drawings wherein like elements are designated by like reference numbers in the various views. FIG. 1 illustrates an outline view of a burner 100 from a top perspective, and FIGs. 2-5 illustrate fragmentary views of the burner 100 in various operating positions. As shown in these illustrations, the burner 100 includes a generally hollow tubular casing or outer tube 102, which encloses an inner plenum 104 and an outer plenum 106 (FIG. 2). The outer tube 102 forms an opening 108 that constitutes a main fuel inlet opening. Fuel, for example, a gaseous fuel, is provided through a conduit 110 having an opening 112 in fluid communication with a fuel source. The outer plenum 106 forms an outer nozzle opening 117 at an end. The outer nozzle opening 117 in the illustrated embodiment is within a converging nozzle end-piece 115 and surrounds an inner nozzle opening 118.

In the illustrated embodiment, an inner tube 114 extends generally concentrically through the outer tube 102 to form the inner plenum 104 within the inner tube 114. An outer plenum 106 is formed in a radial gap between the inner tube 114 and the inner portion of the outer tube 102. In one end thereof, the inner tube 114 is open to form an inlet 116, which can provide cooling air when the burner is not operating and which is typically plugged or otherwise blocked during burner operation. At an end opposite the inlet 116, the inner tube 114 forms the inner nozzle opening 118.

An intermediate tube 120 is disposed around the inner tube 114 and at least partially extends within the outer tube 102. A first sealed bushing 122 extends generally radially between the outer tube 102 and the intermediate tube 120 to fluidly block a radial gap therebetween while also permitting sealable sliding displacement between the outer tube 102 and the intermediate tube 120. Similarly, a second sealed, end bushing 162 extends generally radially between the intermediate tube 120 and the inner tube 114 to fluid block a radial gap therebetween while also permitting sealable sliding displacement between the intermediate tube 120 and the inner tube 114. In the illustrated embodiment, each of the first and second sealed bushings 122 and 124 includes a corresponding radial seal disposed within a corresponding channel formed in the respective bushing that slidably but sealably engages the outer portion of each respective tube. During operation, each of the inner tube 114 and intermediate tube 120 can move with respect to the other and also with respect to the outer tube 102.

Along its length, the inner tube 114 forms a series of openings or fuel inlet slots 126, which in the illustrated embodiment are axially aligned at a first longitudinal segment, A, along a centerline 128 of the burner 100. When the inner tube 114 moves relative to the intermediate tube 120 and/or the outer tube 102, the first longitudinal segment A along the centerline 128 of the burner 100 may also move. The intermediate tube 120, which defines an intermediate plenum 129 between the inner tube 114 and the outer tube 102, forms a series of openings or fuel passages or openings 130, which are axially aligned at a second longitudinal segment, B, along the centerline 128 of the burner 100. As with the inner tube 114, motion or translation of the intermediate tube 120 relative to the outer tube 102 will also move the second longitudinal segment B along the centerline 128 of the burner 100.

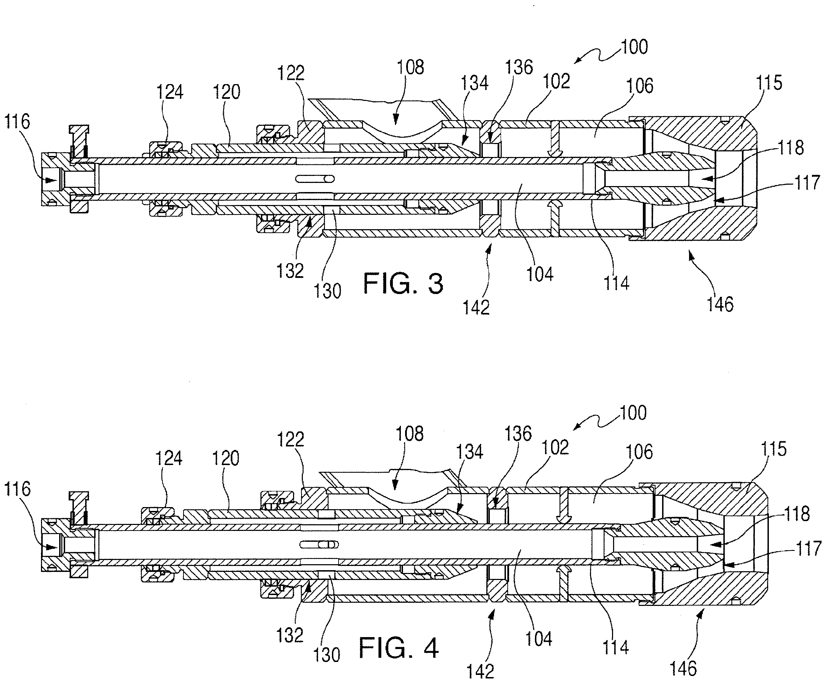

During operation of the burner 100, fuel from the fuel inlet 108 is provided to the outer plenum 106. From the outer plenum 106, depending on the position of the slots 126 and the openings 130, fuel may be provided to the intermediate plenum 129 through the openings 130. From the intermediate plenum 129, fuel passes through the slots 126 to the inner plenum 104. The flow area through the openings 130 can be adjusted by appropriate alignment of the openings 130 with an outer valve seat 132 formed as a portion of the first sealed bushing 122 in the embodiment shown in FIG. 2. In this way, an axial position of the intermediate tube 120 can operate to open or block a flow area of the openings 130 with respect to the valve seat 132, which will in turn have the effect of metering the amount of fuel passing from the outer plenum 106 to the inner plenum 104. Two different positions of the intermediate tube 120 are shown in the cross-sections of FIGS. 3 and 4, in which the openings 130 transition from a fully open position (FIG. 3) to a partially closed position (FIG. 4). A fully closed position is not shown in these illustrations, but would involve the complete blocking of the openings 130 by the valve seat 132 as the intermediate tube 120 moves even further towards the valve seat 132 (i.e., towards the left, in the orientation shown in FIG. 4).

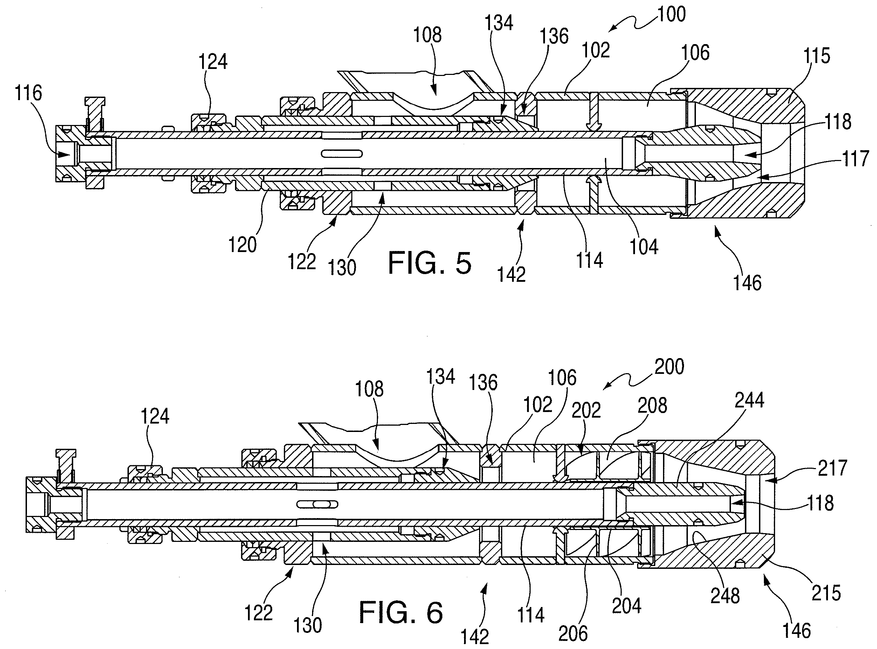

In the illustrated embodiment, to create a pressure in the gas, which forces the gas to pass into the inner plenum 104, a flow area adjustment for fuel passing through the outer plenum 106 is provided by an area-adjustment valve arrangement between the intermediate tube 120 and the outer tube 102. More specifically, a frusto-conical valve element 134 is connected at an end of the intermediate tube 120 that is disposed within the outer tube 102 and is arranged to move with the intermediate tube 120 in unison as the intermediate tube 120 slides relative to the inner tube 114. A valve seat 136 is formed on a collar or bushing 138 that is integrated with the outer tube 102. A resulting annular flow area 140 between the valve seat 136 and the bushing 138, which is adjustable, acts as a flow adjustment valve (FAV) 142 to control the gas velocity through the inner tube 114. In other words, during operation, a restriction of gas flow through the openings 130 and the FAV 142 will cause an increased gas flow through the outer plenum 106. Similarly, an increased flow area and gas flow through the openings 130, coupled with a reduced flow area at the FAV 142 as the intermediate tube 120 moves towards the right in the illustrations, will cause an increased pressure and flow area for gas to enter the inner tube 114, thus increasing gas flow through the inner nozzle 118. Assuming a constant gas flow provided to the burner 100, an increase in the gas flow through the inner nozzle 118 will cause a corresponding decrease in the gas flow passing through the outer nozzle 117. The converse is also true. That is, a decrease in the flow of gas through the inner nozzle 118 will cause a corresponding increase in the gas flow through the outer nozzle 117 as the intermediate tube 120 moves towards the left in the illustrations. Additional flow effects may be exploited. For example, as shown in FIG. 5, certain openings 130 may be configured to be proximate to the fuel inlet opening 108 in the outer tube 102 when the intermediate tube 120 is sufficiently pushed forward, thus further increasing flow through the inner nozzle 118.

The burner 100 further includes a second velocity adjustment mechanism that controls gas velocity within the outer plenum 106. In the illustrated embodiment, a contoured valve element 144 operates as an area adjustment valve (AAV) 146, which operates to adjust an outlet flow area for the outer nozzle opening 117. The contoured valve element 144 forms a bore having an inner surface 148 that is aligned with and forms part of the inner plenum 104. The contoured valve element 144 is connected at an end of the inner tube 114 and is disposed within the converging nozzle end-piece 115. During operation, the contoured valve element 144 cooperates with a contoured inner surface 148 of the converging nozzle end-piece 115 to create, based on the position of the inner tube 114 relative to the outer tube 102, an adjustable flow area for the outer nozzle opening 117. In the embodiment shown in FIG. 2, for example, the flow area between the contoured valve element 144 and the inner surface 148 of the converging nozzle end-piece 115 is set to be small, which will result in an acceleration of the gas passing through the outer nozzle opening 117. Correspondingly, an operating position for in the second nozzle opening 117 formed between a retracted, contoured valve element 144 and the inner surface 148 of the converging nozzle end-piece 115, which forms a larger flow area and, thus, a lower velocity flow through the second nozzle opening 117, is shown in FIGS. 2 and 3.

On the basis of the foregoing, it can be seen that two separate valve mechanisms can be adjusted to control operation of the burner 100. A first valve mechanism, which is formed by the structures associated with the FAV 142, controls the portion of gas input to the burner 100 between the inner and outer nozzle openings 118 and 117. A second valve mechanism, which is formed by the structures associated with the AAV 146, controls the velocity of the gas exiting through the outer nozzle opening 117. In this way, the velocity of gas exiting the inner nozzle opening 118 and outer nozzle opening 117 is controlled by two separate valves.

In the embodiment shown, a threaded rod with a corresponding handle can be used to manually adjust each of the FAV 142 and AAV 146, but other activation mechanisms and/or automatic rather than manual activation mechanisms can be used. As shown in the exemplary embodiment of FIG. 1, a first knob 150 acting on a threaded rod 152 may be threadably engaged with a first activation arm 154 that is connected to the second sealed bushing 124. In this way, turning of the first knob 150 may cause the second sealed bushing 124, and thus the intermediate tube 120, to move relative to the first sealed bushing 122 and thus the outer tube 102 to cause an adjustment of the FAV 142 as described above.

Similar to the FAV 142, activation of the AAV 146 can be carried out in the illustrated, exemplary embodiment by a second knob 156 acting on a threaded rod 158. The threaded rod 158 is threadably engaged with a second activation arm 160 that is connected to the end bushing 162. The end bushing 162 is attached to an end of the inner tube 114. In this arrangement, turning of the second knob 156 will cause the end bushing 162 and inner tube 114 to move relative to the first sealed bushing 122 and thus the outer tube 102 to cause an adjustment of the AAV 146 as described above. In general, independent motion of each of the inner tube 114 and intermediate tube 120 with respect to the outer tube 102 will cause, respectively, separate adjustment of the FAV 142 and AAV 146.

An alternative embodiment for a burner 200 is shown in FIG. 6. In this embodiment, structures and features that are the same or similar to corresponding structures and features of the burner 100 are denoted by the same reference numerals as previously used, for simplicity. In the burner 200, which is shown in fragmentary view from the same perspective as the previous views of the burner 100, a swirling device 202 has been added to the outer plenum 106. Moreover, a contoured valve element 244 having a more slender outline than the contoured valve element 144 is used to achieve an overall decrease in flow velocity through the outer nozzle opening 217 of the burner 200 when compared to the flow through the outer nozzle opening 117 in the burner 100. As shown, the converging inner surface 248 of the end-piece 215 of the burner 200 has a more open shape allowing for a larger cross sectional flow area therein when compared to the inner surface 148 of the converging nozzle end-piece 115 of the burner 100.

The swirling device 202, which is shown in cross-section in FIG. 6, is made from a collar 204 that fits around the inner tube 114. Helical walls 206 extend radially outwardly from the collar 204 and bridge the gap of the outer plenum 106 between the inner tube 114 and the outer tube 102 adjacent an end of the inner tube 114 that is close to the inner nozzle opening 118. The walls 206 have a generally helical shape that creates a helical passage 208 between the walls 206. Gas travelling along the outer plenum 106, as previously described, which will eventually exit the burner through the outer nozzle opening 217, is forced to travel through the helical passages 208 and take on a tangential velocity component, which induces a swirl. The swirling gas exiting the outer nozzle opening 217 allows the outer jet to expand wider and create a thicker flame shape during operation.

The present disclosure describes, therefore, in one aspect, a burner. The burner includes a casing that encloses an outer plenum formed in the casing, and a fuel inlet opening is formed in the casing. An outer nozzle opening is formed at an end of the casing. An inner tube extends generally concentrically through the outer plenum, the inner tube forming an inner plenum such that the casing encloses the outer plenum and the inner plenum, the inner plenum extending generally concentrically with respect to the outer plenum. An inner nozzle opening is formed at an end of the inner tube, the inner nozzle being disposed generally concentrically with respect to the outer nozzle. A valve arrangement is configured and operates to adjust a fluid velocity separately through each of the outer nozzle and the inner nozzle.

In one embodiment, the burner further includes a manual activation mechanism to adjust the fluid flow velocity through each of the outer and inner nozzles by use of the valve arrangement, and in another embodiment the burner includes instead an automated activation mechanism to adjust the fluid flow velocity though each of the outer and inner nozzles by use of the valve arrangement. In one embodiment, the burner further includes a swirling device to impart swirl to fluids exiting through the outer nozzle.

In one embodiment, the valve arrangement includes an intermediate tube disposed around the inner tube, a first sealed bushing extending generally radially between the casing and the intermediate tube such that it fluidly blocks a radial gap therebetween while also permitting sealable sliding displacement between the casing and the intermediate tube, a second sealed bushing extending generally radially between the intermediate tube and the inner tube to fluid block a radial gap therebetween while also permitting sealable sliding displacement between the intermediate tube and the inner tube, a series of axially aligned, fuel inlet slots formed along the inner tube, a series of fuel passages formed along the intermediate tube, a frusto-conical valve element connected at an end of the intermediate tube that is disposed within the casing and is arranged to move with the intermediate tube in unison as the intermediate tube slides relative to the inner tube, and a valve seat formed on a collar that is integrated with the outer tube casing with which the frusto-conical valve is slidably associated. In this way, as the inner tube and intermediate tube are moved relative to the casing and to one another, a variable alignment between the fuel inlet slots and the fuel passages determines a fluid flow rate through the inner tube, and thus the inner nozzle, and, as the intermediate tube and frusto-conical valve element move with respect to the valve seat, a variable flow opening is created between the frusto-conical valve element and the valve seat, which determines a fluid flow rate through the outer plenum, and thus the outer nozzle.

In another aspect, the disclosure describes a burner that includes three concentric cylinders with tapered or thickened ends, the opposing end of each cylinder being blocked or otherwise plugged. Outer and inner concentric nozzles are formed in radial gaps between the three concentric cylinders. Each cylinder is sealably translatable in an axial direction relative to the remaining two concentric cylinders such that a cross-sectional area between the three concentric cylinders changes to control a proportion of gas flow to an outer nozzle formed between an outermost cylinder and an intermediate cylinder, and an inner nozzle formed in the innermost cylinder. An intermediate plenum is formed between the intermediate cylinder and the innermost cylinder is blocked or otherwise plugged at both ends. Radial holes are formed in each of the three cylinders, the radial holes providing the only gas conduits between an outer plenum, which is defined between the outermost cylinder and the intermediate cylinder, and an inner plenum, defined within the innermost cylinder. During operation, gas flow originating from a gas inlet formed in the outermost cylinder is fluidly provided to the inner plenum through the radial holes. The gas inlet is in fluid communication with a fuel source.

In one embodiment, a manual activation mechanism is used to adjust an axial position of the intermediate cylinder and the innermost cylinder separately with respect to the outermost cylinder, thus selectively aligning the radial holes in the intermediate cylinder and the innermost cylinder to control a fluid flow area therebetween, and in another embodiment the manual activation mechanism comprises a knob acting on a threaded rod that is threadably engaged with an activation arm that is connected to a sealed bushing, such that motion of the knob causes a relative motion of a respective tube with respect to the outermost cylinder. In an alternative embodiment, an automated activation mechanism is used to axially, separately move the intermediate cylinder and the innermost cylinder with respect to the outermost cylinder.

In one embodiment, the outer gas nozzle includes a swirling device adapted to impart swirl to an outer gas jet, creating a wide flame shape. In one embodiment, the inner tube is open at both ends forming a passage adapted to provide cooling air when the burner is not operating, which passage is blocked during burner operation. In one embodiment, the radial holes in the intermediate cylinder and inner cylinder are located such that they are fluidly blocked when the intermediate cylinder is disposed at a limit position, and wherein gas flow through the inner nozzle is blocked when the intermediate cylinder is at the limit position.

In yet another aspect, the invention relates to a method for separately controlling flow rate and/or velocity of gas provided to concentric nozzle outlets for a burner. The method includes providing a casing that encloses an outer plenum formed in the casing, providing fuel to the outer plenum through a fuel inlet opening formed in the casing, providing an outer nozzle opening formed at an end of the casing, the outer nozzle providing the fuel to an oxidant rich environment, providing an inner tube extending generally concentrically through the outer plenum, the inner tube forming an inner plenum such that the casing encloses the outer plenum and the inner plenum, the inner plenum extending generally concentrically with respect to the outer plenum, and providing an inner nozzle opening formed at an end of the inner tube, the inner nozzle being disposed generally concentrically with respect to the outer nozzle. In accordance with the method, a fuel velocity separately through each of the outer nozzle and the inner nozzle is adjusted separately to shape a flame extending therefrom.

In one embodiment, the method further includes activating manually the fluid flow velocity through each of the outer and inner nozzles by use of a valve mechanism, and in another embodiment the method includes automatically activating a valve mechanism to adjust the fluid flow velocity though each of the outer and inner nozzles. In one embodiment, swirl is imparted to fuel exiting the outer nozzle. According to the invention, the fuel velocity through each of the outer nozzle and the inner nozzle is adjusted to shape the flame by providing an intermediate tube disposed around the inner tube, forming a series of axially aligned, fuel inlet slots along the inner tube, forming a series of fuel passages along the intermediate tube, providing a valve element on the intermediate tube, and providing a valve seat connected to the casing and cooperating with the valve element to adjust a flow area through the outer plenum from the fuel inlet, such that moving the inner tube relative to the casing to variably align the fuel inlet slots and the fuel passages and determines a fluid flow rate through the inner tube, and thus the inner nozzle and moving the intermediate tube with respect to the casing to create a variable flow opening between the frusto-conical valve element and the valve seat, which determines a fluid flow rate through the outer plenum, and thus the outer nozzle.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A burner (110), comprising:
a casing (102) that encloses an outer plenum (106) formed in the casing; a fuel inlet opening (108) formed in the casing;
an outer nozzle (117) opening formed at an end of the casing;
an inner tube (114) extending generally concentrically through the outer plenum, the inner tube forming an inner plenum (104) such that the casing encloses the outer plenum and the inner plenum, the inner plenum extending generally concentrically with respect to the outer plenum;
an inner nozzle (118) opening formed at an end of the inner tube, the inner nozzle opening being disposed generally concentrically with respect to the outer nozzle opening; and
a valve arrangement configured and operating to adjust a fluid velocity separately through each of the outer nozzle opening and the inner nozzle opening, comprising:
an intermediate tube (120) disposed around the inner tube;
a first sealed bushing (122) extending generally radially between the casing and the intermediate tube such that it fluidly blocks a radial gap therebetween while also permitting sealable sliding displacement between the casing and the intermediate tube;
a second sealed bushing (124) extending generally radially between the intermediate tube and the inner tube to fluid block a radial gap therebetween while also permitting sealable sliding displacement between the intermediate tube and the inner tube;
a series of axially aligned, fuel inlet slots (126) formed along the inner tube;
a series of fuel passages (130) formed along the intermediate tube;
a frusto-conical valve element (134) connected at an end of the intermediate tube that is disposed within the casing and is arranged to move with the intermediate tube in unison as the intermediate tube slides relative to the inner tube; and
a valve seat (136) formed on a collar (138) that is integrated with the casing with which the frusto-conical valve element is slidably associated;
wherein, in use, as the inner tube and the intermediate tube are moved relative to the casing and to one another, a variable alignment between the fuel inlet slots and the fuel passages determines a fluid flow rate through the inner tube, and thus the inner nozzle opening; and
wherein, in use, as the intermediate tube and the frusto-conical valve element move with respect to the valve seat, a variable flow opening is created between the frusto- conical valve element and the valve seat, which determines a fluid flow rate through the outer plenum, and thus the outer nozzle opening.

2. The burner of claim 1, further comprising a manual activation mechanism to adjust the fluid flow velocity through each of the outer and inner nozzle openings by use of the valve arrangement.

3. The burner of claim 1, further comprising an automated activation mechanism to adjust the fluid flow velocity though each of the outer and inner nozzle openings by use of the valve arrangement.

4. The burner of claim 1, further comprising a swirling device to impart swirl to fluids exiting through the outer nozzle opening.

5. A method for separately controlling flow rate and/or velocity of gas provided to concentric nozzle outlets for a burner (110), the method comprising:
providing a casing (102) that encloses an outer plenum (106) formed in the casing; providing fuel to the outer plenum through a fuel inlet opening (108) formed in the casing;
providing an outer nozzle (117) opening formed at an end of the casing, the outer nozzle opening providing the fuel to an oxidant rich environment;
providing an inner tube (114) extending generally concentrically through the outer plenum, the inner tube forming an inner plenum (104) such that the casing encloses the outer plenum and the inner plenum, the inner plenum extending generally concentrically with respect to the outer plenum;
providing an inner nozzle (118) opening formed at an end of the inner tube, the inner nozzle opening being disposed generally concentrically with respect to the outer nozzle opening; and adjusting a fuel velocity separately through each of the outer nozzle opening and the inner nozzle opening to shape a flame extending therefrom by:
providing an intermediate tube (120) disposed around the inner tube;
forming a series of axially aligned, fuel inlet slots (126) along the inner tube;
forming a series of fuel passages (130) along the intermediate tube;
providing a valve element (134) on the intermediate tube; and providing a valve seat (136) connected to the casing and cooperating with the valve element to adjust a flow area through the outer plenum from the fuel inlet;
moving the inner tube relative to the casing to variably align the fuel inlet slots and the fuel passages and determines a fluid flow rate through the inner tube, and thus the inner nozzle opening; and
moving the intermediate tube with respect to the casing to create a variable flow opening between a frusto-conical valve element and the valve seat, which determines a fluid flow rate through the outer plenum, and thus the outer nozzle opening.

6. The method of claim 5, further comprising activating manually the fluid flow velocity through each of the outer and inner nozzle openings by use of a valve mechanism.

7. The method of claim 5, further comprising automatically activating a valve mechanism to adjust the fluid flow velocity though each of the outer and inner nozzle openings.

8. The method of claim 5, further comprising imparting swirl to fuel exiting the outer nozzle opening.

## Patentansprüche

1. Brenner (110), umfassend:
ein Gehäuse (102), das eine in dem Gehäuse gebildete äußere Kammer (106) umschließt;
eine in dem Gehäuse gebildete Kraftstoffeinlassöffnung (108);
eine äußere Düsenöffnung (117), die an einem Ende des Gehäuses gebildet ist;
ein inneres Rohr (114), das sich im Allgemeinen konzentrisch durch die äußere Kammer erstreckt, wobei das innere Rohr eine innere Kammer (104) bildet, sodass das Gehäuse die äußere Kammer und die innere Kammer umschließt, wobei sich die innere Kammer im Allgemeinen konzentrisch in Bezug auf die äußere Kammer erstreckt;
eine innere Düsenöffnung (118), die an einem Ende des inneren Rohres gebildet ist, wobei die innere Düsenöffnung im Allgemeinen konzentrisch in Bezug auf die äußere Düsenöffnung angeordnet ist; und eine Ventilanordnung, die konfiguriert und betriebsfähig ist, um eine Fluidgeschwindigkeit getrennt durch jede der äußeren Düsenöffnungen und der inneren Düsenöffnung einzustellen, umfassend:
ein Zwischenrohr (120), das um das innere Rohr angeordnet ist;
eine erste abgedichtete Buchse (122), die sich im Allgemeinen radial zwischen dem Gehäuse und dem Zwischenrohr erstreckt, sodass sie einen radialen Spalt dazwischen fluidisch blockiert und gleichzeitig eine abdichtbare Gleitverschiebung zwischen dem Gehäuse und dem Zwischenrohr ermöglicht;
eine zweite abgedichtete Buchse (124), die sich im Allgemeinen radial zwischen dem Zwischenrohr und dem inneren Rohr erstreckt, um einen radialen Spalt dazwischen fluidisch zu blockieren und gleichzeitig eine abdichtbare Gleitverschiebung zwischen dem Zwischenrohr und dem inneren Rohr zu ermöglichen;
eine Reihe von axial ausgerichteten Kraftstoffeinlassschlitzen (126), die entlang des inneren Rohres gebildet sind;
eine Reihe von Kraftstoffkanälen (130), die entlang des Zwischenrohres gebildet sind;
ein kegelstumpfförmiges Ventilelement (134), das mit einem Ende des Zwischenrohres verbunden ist, das sich innerhalb des Gehäuses befindet und so angeordnet ist, dass es sich im Einklang mit dem Zwischenrohr bewegt, wenn das Zwischenrohr relativ zum inneren Rohr gleitet; und
einen Ventilsitz (136), der an einem Kragen (138) gebildet ist, der in das Gehäuse integriert ist, mit dem das kegelstumpfförmige Ventilelement verschiebbar assoziiert ist;
wobei bei der Verwendung, wenn das innere Rohr und das Zwischenrohr relativ zum Gehäuse und zueinander bewegt werden, eine variable Ausrichtung zwischen den Kraftstoffeinlassschlitzen und den Kraftstoffkanälen eine Fluidströmungsrate durch das innere Rohr und somit die innere Düsenöffnung bestimmt; und
wobei bei der Verwendung, wenn sich das Zwischenrohr und das kegelstumpfförmige Ventilelement in Bezug auf den Ventilsitz bewegen, eine variable Strömungsöffnung zwischen dem kegelstumpfförmigen Ventilelement und dem Ventilsitz erzeugt wird, die eine Fluidströmungsrate durch die äußere Kammer und somit die äußere Düsenöffnung bestimmt.

2. Brenner nach Anspruch 1, ferner umfassend einen manuellen Aktivierungsmechanismus zum Einstellen der Fluidströmungsgeschwindigkeit durch jede der äußeren und inneren Düsenöffnungen unter Verwendung der Ventilanordnung.

3. Brenner nach Anspruch 1, ferner umfassend einen automatisierten Aktivierungsmechanismus zum Einstellen der Fluidströmungsgeschwindigkeit durch jede der äußeren und inneren Düsenöffnungen unter Verwendung der Ventilanordnung.

4. Brenner nach Anspruch 1, ferner umfassend eine Wirbelvorrichtung, um Fluiden, die durch die äußere Düsenöffnung austreten, einen Wirbel zu verleihen.

5. Verfahren zum getrennten Steuern der Strömungsrate und/oder Geschwindigkeit von Gas, das konzentrischen Düsenauslässen für einen Brenner (110) bereitgestellt wird, das Verfahren umfassend:
Bereitstellen eines Gehäuses (102), das eine in dem Gehäuse gebildete äußere Kammer (106) umschließt; Bereitstellen von Kraftstoff an die äußere Kammer durch eine in dem Gehäuse gebildete Kraftstoffeinlassöffnung (108);
Bereitstellen einer äußeren Düsenöffnung (117), die an einem Ende des Gehäuses gebildet ist, wobei die äußere Düsenöffnung den Kraftstoff für eine oxidationsmittelreiche Umgebung bereitstellt;
Bereitstellen eines inneren Rohres (114), das sich im Allgemeinen konzentrisch durch die äußere Kammer erstreckt, wobei das innere Rohr eine innere Kammer (104) bildet, sodass das Gehäuse die äußere Kammer und die innere Kammer umschließt, wobei sich die innere Kammer im Allgemeinen konzentrisch in Bezug auf die äußere Kammer erstreckt;
Bereitstellen einer inneren Düsenöffnung (118), die an einem Ende des inneren Rohres gebildet ist, wobei die innere Düsenöffnung im Allgemeinen konzentrisch in Bezug auf die äußere Düsenöffnung angeordnet ist; und getrenntes Einstellen einer Kraftstoffgeschwindigkeit durch jede der äußeren Düsenöffnungen und der inneren Düsenöffnung, um eine Flamme zu formen, die sich davon erstreckt durch:
Bereitstellen eines Zwischenrohres (120), das um das innere Rohr herum angeordnet ist;
Bilden einer Reihe von axial ausgerichteten Kraftstoffeinlassschlitzen (126) entlang des inneren Rohres;
Bilden einer Reihe von Kraftstoffkanälen (130) entlang des Zwischenrohres;
Bereitstellen eines Ventilelements (134) an dem Zwischenrohr; und Bereitstellen eines Ventilsitzes (136), der mit dem Gehäuse verbunden ist und mit dem Ventilelement zusammenarbeitet, um einen Strömungsbereich durch die äußere Kammer vom Kraftstoffeinlass aus einzustellen;
Bewegen des inneren Rohres relativ zum Gehäuse, um die Kraftstoffeinlassschlitze und die Kraftstoffkanäle variabel auszurichten und eine Fluidströmungsrate durch das innere Rohr und damit die innere Düsenöffnung zu bestimmen; und
Bewegen des Zwischenrohres in Bezug auf das Gehäuse, um eine variable Strömungsöffnung zwischen einem kegelstumpfförmigen Ventilelement und dem Ventilsitz zu erzeugen, die eine Fluidströmungsrate durch die äußere Kammer und damit die äußere Düsenöffnung bestimmt.

6. Verfahren nach Anspruch 5, ferner umfassend das manuelle Aktivieren der Fluidströmungsgeschwindigkeit durch jede der äußeren und inneren Düsenöffnungen unter Verwendung eines Ventilmechanismus.

7. Verfahren nach Anspruch 5, ferner umfassend das automatische Aktivieren eines Ventilmechanismus zum Einstellen der Fluidströmungsgeschwindigkeit durch jede der äußeren und inneren Düsenöffnungen.

8. Verfahren nach Anspruch 5, ferner umfassend das Verleihen eines Wirbels auf Kraftstoff, der aus der äußeren Düsenöffnung austritt.

## Revendications

1. Brûleur (110) comprenant :
un carter (102) renfermant un plénum externe (106), formé dans le carter; une ouverture d'entrée de carburant (108), formée dans le carter ;
une ouverture de buse externe (117), formée à une extrémité du carter ;
un tube interne (114), s'étendant globalement de manière concentrique à travers le plénum externe, le tube interne formant un plénum interne (104) de sorte que le carter renferme le plénum externe et le plénum interne, le plénum interne s'étendant globalement de manière concentrique par rapport au plénum externe ;
une ouverture de buse interne (118), formée à une extrémité du tube interne, l'ouverture de buse interne étant disposée globalement concentriquement par rapport à l'ouverture de buse externe ; et
un agencement de soupape, conçu et fonctionnant pour régler une vitesse de fluide séparément à travers chacune de l'ouverture de buse externe et de l'ouverture de buse interne, comprenant :
un tube intermédiaire (120), disposé autour du tube interne ;
une première douille étanche (122), s'étendant globalement radialement entre le carter et le tube intermédiaire de sorte qu'elle bloque fluidiquement un espace radial entre eux tout en permettant également un déplacement coulissant scellable entre le carter et le tube intermédiaire ;
une seconde douille étanche (124), s'étendant globalement radialement entre le tube intermédiaire et le tube interne pour bloquer par le fluide un espace radial entre eux tout en permettant également un déplacement coulissant scellable entre le tube intermédiaire et le tube interne ;
une série de fentes d'entrée de carburant alignées axialement (126), formées le long du tube interne ;
une série de passages de carburant (130), formés le long du tube intermédiaire ;
un élément de soupape tronconique (134), relié à une extrémité du tube intermédiaire, disposée à l'intérieur du carter, et agencé pour se déplacer avec le tube intermédiaire à l'unisson lorsque le tube intermédiaire coulisse par rapport au tube interne ; et
un siège de soupape (136), formé sur un collier (138) intégré au carter avec lequel l'élément de soupape tronconique est associé de manière coulissante ;
en cours d'utilisation, lorsque le tube interne et le tube intermédiaire sont déplacés par rapport au carter et l'un par rapport à l'autre, un alignement variable entre les fentes d'entrée de carburant et les passages de carburant déterminant un débit de fluide à travers le tube interne et donc à travers ouverture de la buse interne ; et
en cours d'utilisation, lorsque le tube intermédiaire et l'élément de soupape tronconique se déplacent par rapport au siège de soupape, une ouverture à débit variable étant créée entre l'élément de soupape tronconique et le siège de soupape, qui détermine un débit de fluide à travers le plénum externe et donc à travers l'ouverture de la buse externe.

2. Brûleur selon la revendication 1, comprenant en outre un mécanisme d'activation manuelle permettant de régler la vitesse d'écoulement du fluide à travers chacune des ouvertures de buse externe et interne à l'aide de l'agencement de soupape.

3. Brûleur selon la revendication 1, comprenant en outre un mécanisme d'activation automatisé pour régler la vitesse d'écoulement du fluide à travers chacune des ouvertures de buse externe et interne à l'aide de l'agencement de soupape.

4. Brûleur selon la revendication 1, comprenant en outre un dispositif de tourbillonnement permettant de conférer un tourbillon aux fluides sortant par l'ouverture de buse externe.

5. Procédé de régulation séparée du débit et/ou de la vitesse du gaz fourni aux sorties de buses concentriques pour un brûleur (110), le procédé comprenant :
l'utilisation d'un carter (102) renfermant un plénum externe (106) formé dans le carter; la fourniture de carburant au plénum externe à travers une ouverture d'entrée de carburant (108) formée dans le carter ;
l'utilisation d'une ouverture de buse externe (117) formée à une extrémité du carter,
l'ouverture de buse externe fournissant le carburant à un environnement riche en oxydant ;
l'utilisation d'un tube interne (114) s'étendant globalement de manière concentrique à travers le plénum externe, le tube interne formant un plénum interne (104) de sorte que le carter enferme le plénum externe et le plénum interne, le plénum interne s'étendant globalement concentriquement par rapport au plénum externe ;
l'utilisation d'une ouverture de buse interne (118) formée à une extrémité du tube interne,
l'ouverture de buse interne étant disposée globalement concentriquement par rapport à l'ouverture de buse externe ; et le réglage d'une vitesse de carburant séparément à travers chacune de l'ouverture de buse externe et de l'ouverture de buse interne pour former une flamme s'étendant à partir de celle-ci :
par utilisation d'un tube intermédiaire (120), disposé autour du tube interne ;
par formation d'une série de fentes d'entrée de carburant (126), alignées axialement le long du tube interne ;
par formation d'une série de passages de carburant (130) le long du tube intermédiaire ;
par utilisation d'un élément de soupape (134) sur le tube intermédiaire; et par utilisation d'un siège de soupape (136) relié au carter et coopérant avec l'élément de soupape pour régler une zone d'écoulement à travers le plénum externe à partir de l'entrée de carburant ;
par déplacement du tube interne par rapport au carter pour aligner de manière variable les fentes d'entrée de carburant et les passages de carburant et pour déterminer un débit de fluide à travers le tube interne et donc à travers l'ouverture de buse interne ; et
par déplacement du tube intermédiaire par rapport au carter pour créer une ouverture d'écoulement variable entre un élément de soupape tronconique et le siège de soupape, ce qui détermine un débit de fluide à travers le plénum externe et donc à travers l'ouverture de buse externe.

6. Procédé selon la revendication 5, comprenant en outre l'activation manuelle de la vitesse d'écoulement du fluide à travers chacune des ouvertures de buse externe et interne à l'aide d'un mécanisme de soupape.

7. Procédé selon la revendication 5, comprenant en outre l'activation automatique d'un mécanisme de soupape pour régler la vitesse d'écoulement du fluide à travers chacune des ouvertures de buse externe et interne.

8. Procédé selon la revendication 5, comprenant en outre l'application d'un tourbillon au carburant sortant de l'ouverture de buse externe.
